# EUROPEAN PATENT APPLICATION

(11) **EP 2 541 786 A1**
(43) Date of publication of application: **02.01.2013**
(21) Application number: 11171931.6
(22) Date of filing: 29.06.2011
(51) Int. Cl.: H04B 3/36, G06F 13/40

(54) **Data transmission cable with integrated repeater unit and cable assembly comprising such a cable**

(71) Applicant: Tyco Electronics Belgium EC BVBA, 8020 Oostkamp (BE); Tyco Electronics Nederland B.V., 5222 AR 's-Hertogenbosch (NL)
(72) Inventor: Decrock, Lieven, 8800 Roeselare (BE); Smink, Rutger, 5628 KH Eindhoven (NL)
(74) Representative: Patentanwaltskanzlei WILHELM & BECK

(57) **Abstract**

The present invention relates to a data transmission cable (1) comprising: at least one data transmission line (5, 55) for transmitting data signals, and at least one repeater unit(4), whereby said data line (5) and said repeater unit (4) are integrated into said cable (1).

## Description

The present invention relates to data transmission cable comprising at least one data line and at least one signal repeater for amplifying and equalizing the signals transmitted over the electrical line.

In the field of data transmission cables, in particular highspeed applications, there is a constant desire to achieve data transmission at high data rates and over long distances.

In the prior art, it is well-known to use repeater apparatuses for amplifying signals which are transmitted over electrical lines. For transmitting data with high data rates, e.g. more than 5 Gb per second (Gbps), particularly for passive copper lines, a maximum cable length is limited to a length shorter than 8 m, depending on the wire diameter. Hence, the cable length is one of the limiting factors for achieving high data rates for such passive copper lines.

The known repeater apparatuses are usually arranged between a first and a second cable and receive the signals of the first cable, equalize and amplify the signals and transmit the signals to the second cable.

Such known apparatuses are usually provided in the form of a stand alone box, which is connected to the various cables in order to achieve the desired amplification and equalization of the signals. This commonly known repeater apparatus is bulky and limits the design freedom of the system designer.

The object of the invention is to provide a data transmission cable and cable assembly which is able to transfer data signals over a longer stretch and/or with a higher data rate.

A further object of the present invention is to provide a cable and/or cable assembly which allows increased design freedom.

The object of the invention is solved by data transmission cable according to claim 1 and a cable assembly according to claim 14.

Preferred embodiments of the invention are disclosed in the dependant claims.

A basic advantage of the provided data transmission cable is that data signals can be transmitted over a cable with significantly increased length and/or with a higher data rate. This advantage is achieved by providing at least one repeater unit which is integrated into the cable. The feature of integrating into the cable means for example that the repeater unit is covered by the insulating outer jacket of the cable. However, this inventive feature of integrating into the cable also comprises the case in which the repeater unit is for example embedded into said outer jacket as such. Due to the integration of the repeater unit in the cable, a user of the cable does not have to fix two cables to a commonly known repeater apparatus but is able to use the inventive cable alone for transmitting data signals over a longer stretch or with a higher data rate, e.g. a data rate higher than 5 Gb per second (Gbps). A further advantage is the fact that the size of the cable is dramatically reduced, thereby significantly increasing the design freedom. As material for the wires of the electrical lines e.g. copper can be used without causing any problems due to bad quality of the electrical signals. The integrated repeater has the advantage that no contact problems between the repeater and the electrical lines are generated by environmental conditions. The new cable can be used without the need to connect the cable to a repeater.

According to a preferred embodiment at least two repeater units are integrated into said cable under a predetermined distance from each other. According to this preferred embodiment it is possible to arrange two ore more repeater units along the longitudinal direction and/or perpendicular to said longitudinal direction of the cable at predetermined intervals, thereby achieving a desired cable length.

According to an preferred embodiment the cable comprises a repeater unit which is arranged on a carrier for the repeater unit. The carrier is for example a (flexible) printed circuit board. Thus, a cheap and simple technique is used in order to provide that the repeater unit and the printed circuit board are protected against mechanical or electrical damages. Instead of a printed circuit board other chip carrying structures could be used, such as a lead frame on which the repeater unit is mounted and said lead frame is connected to the data line and power line as necessary. A further example of a chip carrying structure is a molded carrier manufactured according to molded interconnect device (MID)technology, which is known to the skilled person and is therefore not elaborated in detail. The carrier may be made of a plastic material.

The molded material allows any kind of shape for the carrier. Preferably, opposite ends of the carrier have a circular shape. This feature allows a simple integration of the carrier in the cable.

In a further embodiment, the repeater unit is covered with an electrical shielding whereby the shielding is connected to a shielding of the cable. For this reason, an improved electrical shielding of the repeater unit is achieved.

In a further embodiment, the electrical shielding may have a similar cross-sectional shape as the cable, e.g. a cylindrical shape. The electrical shielding may be embodied as a metallic encasement with a cylindrical shape, the repeater unit being positioned in the encasement.

In a further embodiment, the repeater unit and the endings of the data lines are embedded in a molded material. This improves the fixing of the endings of the data lines at the repeater unit, preventing a loosening of the data lines.

In a further embodiment, the repeater unit and the ending of the power line are embedded in a molded material. This feature improves the mechanical fixing of the power line to the repeater unit. Furthermore, an improved electrical insulation is provided by using an insulating molded material.

In a further embodiment, the electrical lines are pairs of preferably twisted lines.

Embodiments of the invention are described in the following figures, in which:
Figure 1 shows a schematic view of a cable assembly with a repeater unit;
Figure 2 shows a more detailed view of the repeater unit;
Figure 3 depicts a cross-sectional view of the first section of the cable;
Figure 4 depicts a cross-sectional view of the cable with a printed circuit board; and
Figure 5 depicts a cross-sectional view of another type of cable.
Figure 6 shows a schematic top view on the printed circuit of figure 4; and
Figure 7 shows a molded carrier for the repeater unit.

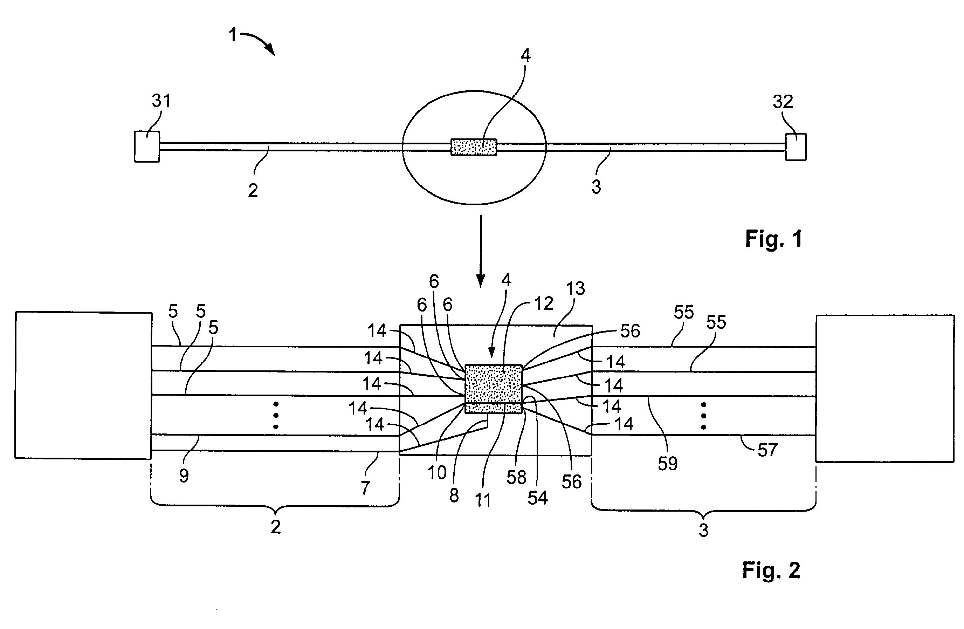

Figure 1 depicts a basic structure of a data transmission cable 1 having a first data line section 2 and a second data line section 3 and a repeater unit 4 (in the following referred to as repeater) which is integrated into the cable 1 and connected to the first data line section 2 and the second data line section 3. Endings of the cable 1 are preferably connected to a first and to a second electrical connector 31, 32. The repeater 4 is a signal-receiving, signal-equalizing and signal-amplifying circuit which is used to receive data signals from the first or second data line section 2, 3, amplifying the data signals and sending the amplified data signals to the second or the first data line section 3, 2. The basic function of repeater 4 is to amplify the data signals which results in the possibility of transmitting data signals with a higher data transmission rate and/or to transmit data signals over a longer data line. The repeater circuit may reshape the signal, re-time the signal or perform a combination of these functions on an analogue or digital data signal.

In the shown preferred embodiment, the repeater 4 is integrated into the cable 1 which means that repeater 4 is embedded in the cable 1 and covered by the insulating coating of the cable 1, i. e. an insulating outer jacket. However, depending on the used embodiment, there might be a separate insulating coating for the repeater 4. This embodiment might be used if the repeater 4 has a larger cross-sectional area than the adjacent first and second data line sections 2, 3. The coating of the cable 1 encloses the first data line, the second data line, a power line 7 and the repeater 4, for example in a one-piece coating.

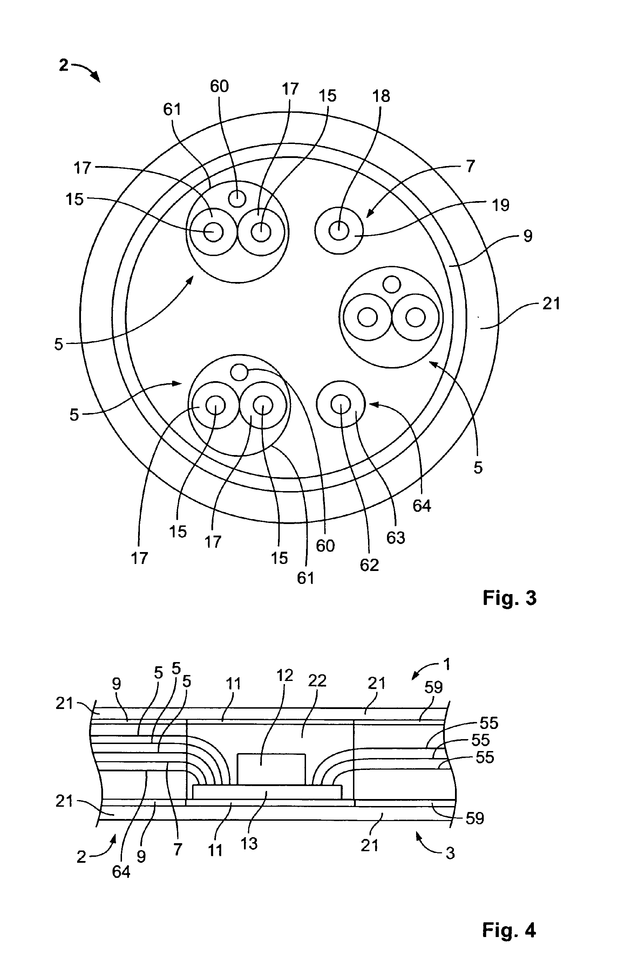

Figure 2 depicts a schematic view of a section of cable 1 in the area of the repeater 4, whereby insulating materials of the cable are not depicted. As shown, the cable 1 is divided into a first line section 2 and a second line section 3. The first line section 2 comprises several first data lines 5 which are connected to electrical contacts 6 of the repeater 4. Each of the first data lines 5 is electrically insulated and comprises a wire made of electrical conducting material as e.g. copper. The first line section 2 additionally comprises a power line 7 which is connected to a power contact 8 of the repeater 4. The power line 7 provides electrical power for the repeater 4. Furthermore, the first line section 2 comprises an electrical shielding 9 which encloses the first data lines 5 and the power line 7 and which is only schematically depicted in Figure 2 as a simple line. The electrical shielding 9 is connected to a first electrical mass contact 10 of the repeater 4. Depending on the used embodiment, there may be a separate electrical line for providing an electrical mass for the repeater 4 or a drain wire 60 as shown in figure 3 may be used. The first data lines 5 may be used as single lines for transmitting for example analogue or digital data signals via the cable 1. Depending on the used embodiment, instead of single data lines 5, pairs of electrical lines, e.g. twisted pairs or twin-pairs of data lines, may be used for transmitting data signals via the cable 1, as well.

The second data line section 3 may be embodied identically to the first data line section 2 comprising several second data lines 55 which are connected to electrical second contacts 56 of the repeater 4. The second line section 3 may also comprise a second shielding 59 which is connected to a second mass contact 54 of the repeater 4. Depending on the used embodiment, a second power line may not be disposed in the second data line section 3 as it is sufficient to provide the electrical power via the first line section 2. However, depending on the used embodiment, there may also be a second power line 57 disposed in the second line section 3 connected to a second power contact 58 of repeater 4 or to a subsequent repeater in the cable 1. The shieldings 9, 59 of the first and the second line section 2, 3 may be electrically connected to an electrical shielding layer 11 which encloses the repeater 4, thereby preventing ESD and EMI problems. Depending on the used embodiment, the shielding layer 11 may encompass the repeater 4 in the shape of a sleeve. The shielding layer 11 may be embodied as an electrically conducting encasement which is open at two opposite endings for receiving the first and the second line sections 2, 3. In Figure 2, the shielding layer 11 is schematically depicted as a white line which is connected to the shieldings 9, 59 of the first and the second line sections 2, 3. The shielding 9, 59 is for example a braid.

The repeater 4 may be embodied as an integrated circuit in a chip housing 12 which is arranged on a carrier, e.g. a printed circuit board 13. The chip housing 12 may comprise electrical pins which stick in openings of the printed circuit board 13. The printed circuit board 13 may comprise electrical conductors 14 which are connected to pins of the chip housing 12 and to endings of the data lines 5, 55 and the power line 7. The wires of the lines 5, 55 may be soldered to the electrical conductors 14 of the printed circuit board 13. Furthermore, the pins of the chip housing 12 may be soldered to the electrical conductors 14. Depending on the used embodiment, the data lines 5, 55 are directly guided to the contacts of the repeater 4.

In a further embodiment, the cable 1 may comprise several repeaters which are arranged at predetermined intervals. Each of the repeaters is connected to a power line 7, 57.

In a further embodiment, the power line may be disposed as a separate line independent from the cable 1 or the repeater 4 may be supplied with power by inductive coupling. In this embodiment, the repeater 4 comprises a power receiving element, for example a coil.

Figure 3 depicts a cross-sectional view of the first line section 2. The second line section 3 is embodied in the same manner. If there is only one repeater 4, then the second line section 3 does not require a power line. The first line section 2 comprises several first data lines 5. The shown first data line 5 is embodied as a twin-pair cable with pairs of wires 15, whereby each wire 15 is covered with an insulating layer 17. Furthermore, a drain wire 60 is arranged at the pair of insulated wires 15. The pair of wires 15 and the drain wire 60 are surrounded by a second electrical shielding 61. The drain wire 60 is an electrical conductor and is used as grounding and current return path. The wires 15 may be solid conductors or comprised of a plurality of smaller strands. The wires 15 may be made of copper or aluminum or copper-plated or -sheeted aluminum or the like. Depending on the used embodiment, the first data lines 5 may be embodied as a single insulated and electrical shielded wire 15.

The first line section 2 comprises the power line 7 with a power conductor 18 which is covered with a second insulating layer 19. The first data lines 5 and the power line 7 are encompassed by the electrical shielding 9. The shielding 9 has the shape of a braid and encompasses the first data lines 5 and the power line 7. The shielding 9 is covered with an outer jacket 21 which encompasses the shielding 9 and which is made of an insulating material. The outer jacket 21 disposes an insulating coating of the cable. Furthermore, there is a mass line 64 which comprises a mass conductor 62 which is covered by a third insulating layer 63. The mass line 64 is connected to a mass contact of the repeater 4.

Figure 4 shows a schematic cross-sectional view of the cable in the area of the repeater chip 12 which is arranged on a printed circuit board 13. The first and second data lines 5, 55, the mass line 64 and the power line 7 of the first and the second line section 2, 3 are connected to the printed circuit board 13 and the repeater circuit of the repeater chip 12. The printed circuit board 13 and the repeater chip 12 and the endings of the power line 7 and the endings of the first and second data lines 5, 55 are embedded in an insulating molded material 22. Depending on the used embodiment, the whole printed circuit board may be embedded in the molded material 22 or at least the connection areas of the power line 7 and the first and second data lines 5, 55 with the printed circuit board 13 and/or the repeater chip 12 may be at least covered or embedded in the molded material 22. The molded material 22 may be an insulating material, for example a thermoplastic polymer.

Depending on the used embodiment, the molded material 22 may be covered with an electrically shielding layer 11 which functions as an electrical shielding. The shielding layer 11 encompasses the printed circuit board 13 and the repeater chip 12, for example in a basic structure of a sleeve with open ends for feeding the power lines 7 and the first and second data lines 5, 55 to the printed circuit board 13. Depending on the used embodiment, the shielding layer 11 may also be embodied as a metallic encasement, for example in the shape of a cylindrical sleeve. The diameter of the encasement may be nearly the same as the diameter of the shielding 9, 59 of the first and second line section 2, 3. The shielding layer 11 or, in the embodiment of the metallic encasement, the metallic encasement is enclosed by the insulating outer jacket 21 of cable 1. The cable 1 may have a larger cross-sectional area in the section of the printed circuit board 13 and the repeater chip 12. However, there is a smooth changeover from the first and second line section 2, 3 to the section of the printed circuit board 13 and the repeater chip 12 whereby the outer jacket 21 continuously covers the first and second line section 2, 3 and the printed circuit board with the repeater chip 12.

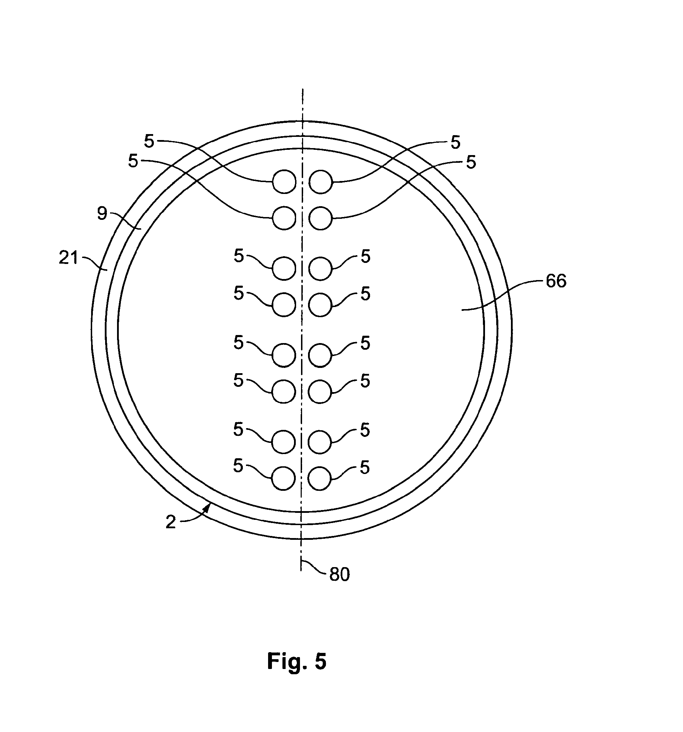

Figure 5 shows a cross sectional view of a last section of a first electrical line section 2 nearby a section 40 in which a repeater 4 is arranged. The first data lines 5 are arranged in pairs on opposite sides of a middle plane 80. The middle plane 80 is arranged in parallel to the plane of the printed circuit board 13 on which the repeater 4 is arranged. The first data lines 5 are connected with contacts on opposite faces of the pcb 13. The data lines 5 are molded in an electrically insulating material 66 forming a circular cross section. The insulating material 66 may be covered with an electrical shielding and an outer jacket 21, as shown in Figure 3. Depending on the used embodiment there may only be one plane of first data lines 5. The arrangement of the first data lines 5 in one or as shown in two parallel planes changes with a larger distance from the repeater 4 to the usual distributed arrangement of first data lines 5 as shown in Figure 3.

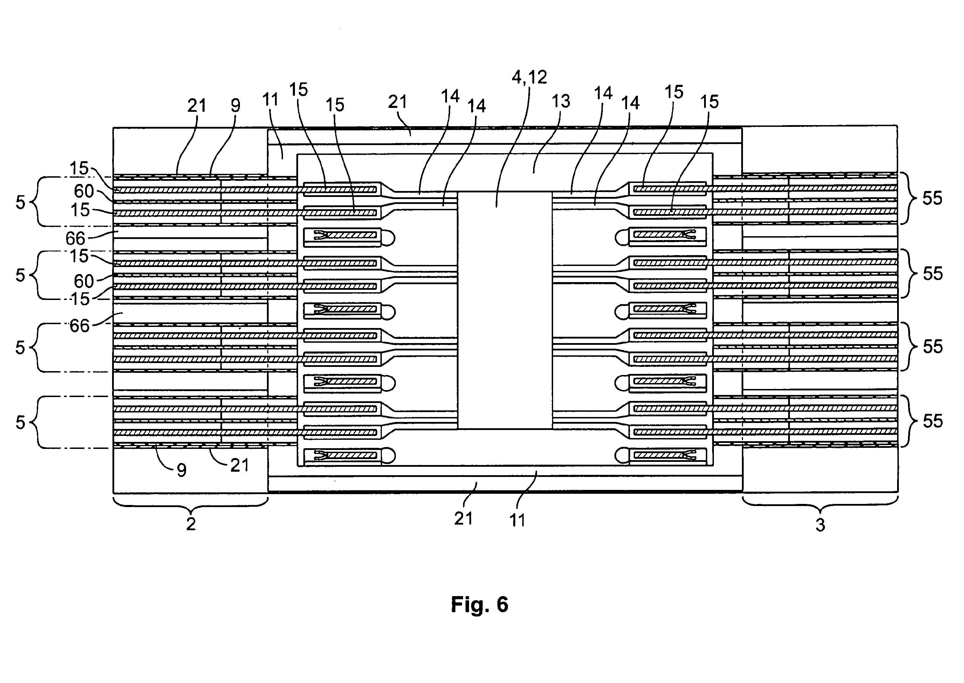

Figure 6 shows a cross-sectional view of the section 40 of Figure 5 in which the first and second line section 2, 3 are connected to the repeater 4 as shown in figure 4. The wires 15 and the drain wire (not shown) of the first data line 5, the power conductor (not shown) and the mass conductor (not shown) are electrically connected with respective contacts of the repeater 4. The electrical circuit of the repeater 4 may comprise capacitors for AC decoupling.

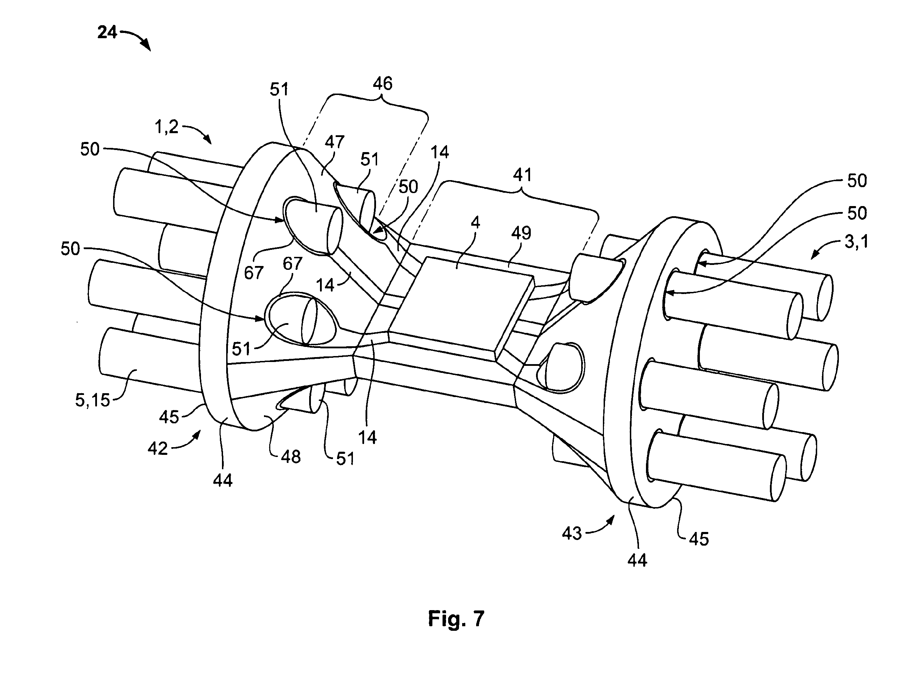

Figure 7 shows a further embodiment of the cable 1 whereby the repeater 4 or the repeater chip 12 is arranged on a carrier 24. The carrier 24 may be made of a molded insulating material which may comprise electrical conductors 14. The molded material may be made of thermoplastic polymers. The molded material has the advantage that an individual geometry can be formed for carrying the repeater chip 12. For example, Figure 7 depicts a schematic view of the molded carrier 24 which has a longitudinal shape with two opposite endings 25, 26. The two opposite endings 25, 26 comprise a conical shape. End sections of the endings 25, 26 have a circular cross-sectional area perpendicular to a longitudinal axis of the carrier 24. The first and second data lines 5,55 are guided through openings 50 of the carrier 24. In one embodiment the openings 50 comprise layers 31 made of electro-conductive material. The wires 15 of the first and second data lines 5,55 are electrically connected to the layers 67, for example by solder connection. The layers 67 are connected with the electrical conductors 14 which are arranged on the carrier 24 and which are guided to electrical contacts of the repeater chip 12. In the shown embodiment the electrical conductors 14 are arranged on an upper side and on a lower side of the carrier 24. At one ending 25,26 three wires 15 are connected with respective three electrical conductors of the upper side of the carrier and three wires 15 are connected with the respective three electrical conductors 14 of the lower side of the carrier 24. At the opposite ending it is the same.

Thus it is possible to connect several first and second data lines 5,55 in a circular arrangement to the carrier 24. The circular arrangement of the first and second data lines 5,55 has the advantage that the first and second data lines 5,55 can be fixed with the carrier 24 without having the need to change the position of the first and second data lines that they have in the cable 1. In the cable 1 the first and second data lines are not arranged in one plane but distributed in a circular cross section area, as shown in Figure 3. Furthermore a lot of several first and second data lines can be guided in a small circular cross section area to the carrier 24. Also the drain wires 60, the power lines 7 and the mass line 64 are connected to the carrier 24. The fixing may be performed by a glued connection.

Between the two endings 25, 26, the diameter of the molded carrier 24 is reduced and comprises a middle section 41 with a plane plate on which the repeater chip 12 is disposed. The middle section 41 may have at least the same area as the repeater chip 12. Furthermore, the carrier 24 may comprise electrical conductors 14 on the surface, which are connected to conductors of the first and the second data lines 5,55 of the power line 7, and of the mass line 64 of the first and second electrical line section 2, 3 and which are guided and connected with pins of the repeater chip 12.

Depending on the used embodiment, the drain wires 60 of the first and second data lines 5,55 may be fixed to the carrier 24, whereby the first and second data lines 5,55 and the power lines 7 and the mass line 64 are guided for example on guiding faces or guiding openings 30 to the repeater chip 12. The wires 15 of the first and second data line 5,55, the mass conductor 62 of the mass line 64 and the power conductor 18 of the power line 7 are electrically connected with contacts of the repeater chip 12.

The carrier 24 may be embedded in or covered by a molded material 22, that may be made of an electrically insulating material. The embedded carrier 24 may have the shape of a cylinder, preferably with the same diameter as a frst and second line section of the cable. Furthermore, the carrier may be enclosed by a shielding conducting layer 11. The shielding layer 11 may be embodied as a shielding encasement with the shape of a cylindrical sleeve. The insulating outer jacket 21 of the cable 1 may cover the first and second electrical line section 2, 3 and the shielding encasement 29.

The connecting element 24 comprises a plate section 41 and two opposite receiving sections 42, 43. The first and second receiving sections 42, 43 are in this embodiment in an identical shape. Each of the receiving section 42, 43 comprises a circular shape perpendicular to a longitudinal axis of the connecting element. The circular shape 44 is limited by an end face 45 that is opposite to the plate section 41. A diameter of the first receiving section 42 starting from the circular shape 44 diminishes in an intersection region 46 in direction to the plate section 41. The intersection region 46 between the circular shape 44 and the plate section 41 is embodied as two opposite half conical planes 47, 48 that change over to the plate section 41. The plate section 41 is embodied as a rectangular plate, whereby on an upper side 49 a repeater unit 4 is fixed to the upper side 49 of the plate section 41. The first receiving section 42 comprises six holes 50 which are guided through the end face 45 in a longitudinal direction of the connecting element 24. The holes 50 are arranged in a circular arrangement. Preferably, the holes 50 are uniformly distributed over a circle. Wires 15 of a first data line 5 of the first line section 2 of a cable 1 are guided via the end face 45 through the holes 50. Ends 51 of the wires 15 protrude through the first or second plane 47, 48.

On the surface of the first and second plane 47, 48 electrical conductors 14 are disposed which are guided from the holes 50 to a contact area where contacts of the repeater unit 4 are disposed. Depending on the used embodiment, at least a part of the hole 50 is covered with an electrical layer 67 that may be part of an electrical conductor 14 or that is connected with the electrical conductor 14. The ends 51 of the wires 15 are electrically connected to the electrical layer 67 or to the conductors 14 for example by soldering.

Depending on the used embodiment, the cross sectional area of the first and second receiving section 42, 43 may also have different shapes for example a rectangular shape and a circular shape. The shown connecting element 24 is only an example for one of several possible shapes.

Furthermore in Fig. 7 only an upper side of the plate section 41 can be seen. The lower side of the connecting element 24 can be identical to the upper side, whereby depending on the used embodiment, also on the lower side a further repeater unit 4 may be arranged or the conductors 14 of the lower side are guided via the plate section 41 to the upper side of the plate section 41 and connected with contacts of the repeater unit 4.

Furthermore, the arrangement of the holes 50 may change depending on the used embodiment. Instead of holes 50, recesses may be arranged that are open to a rim area of the circular shape 44.

## Claims

1. A data transmission cable (1) comprising:
at least one data line (5, 55) for transmitting data signals, and
at least one repeater unit(4),
whereby said data line (5), and said repeater unit (4) are integrated into said cable (1).

2. The cable according to claim 1, whereas at least two repeater units (4) are integrated into said cable (1) at a predetermined distance from each other.

3. The cable according to claim 1 or 2, said cable (1) further comprises at least one power line (7, 57) for delivering electrical power, said power line (7, 57) is integrated in said cable (1).

4. The cable (1) according to any one of said claims 1 to 3, said cable (1) further comprising:
a first section (2) with a first data line (5) and a second section (3) with a second data line (55), the first and the second data lines (5, 55) are disposed for transmitting data signals; a power line (7) in the first section (2) for delivering electrical power,
whereby the repeater unit (4) is connected with the first and second data lines (5, 55), whereby the repeater unit (4) is connected with the power line (7), whereby the repeater unit (4) is provided for receiving data signals from the first data line (5), amplifying the data signals and sending the amplified data signals to the second data line (55), whereby the first data line (5), the repeater unit (4) and the second data line (55) are covered with an insulating outer jacket (21) of the cable (1).

5. The cable according to any of the preceding claims, whereby the repeater unit (4) is arranged on a repeater unit carrier (13, 24).

6. The cable of any one of the preceding claims, whereby the repeater unit (4) is covered with an electrical shielding (11), whereby the shielding (11) is connected with a shielding (9, 59) of the cable (1).

7. The cable of any one of claims 4 to 6, whereby the electrical shielding (11) of the repeater unit (4) has a cross sectional shape which is similar to the cross sectional shape of the cable (1).

8. The cable of any one of the preceding claims, whereby the repeater unit (4) and the endings of the first and second data lines (5, 55) are embedded in a molded material (22).

9. The cable of any one of the preceding claims, whereby the repeater unit (4) and the ending of the power line (7) are embedded in a molded material (22).

10. The cable of any one of the preceding claims, whereby the data lines (5, 55) are pairs of twisted electrical lines.

11. The cable according to any one of the claims 5 to 10, whereby the repeater unit (4) and the carrier (13, 24) are integrated in the cable (1).

12. The cable according to claim 11, whereby the carrier (24) is made of a molded material.

13. The cable of claim 11 or 12, whereby the carrier (24) comprises electrical conductors (14), the conductors (14) being connected with contacts of the repeater unit (4) and with wires (15) of the first and second data lines (5, 55) .

14. The cable assembly comprising at least one data transmission cable (1) according to any of the previous claims, whereas at least one electrical connector (31, 32) is terminated to at least one end of said cable (1).

## Amended claims

### Amended claims in accordance with Rule 137(2) EPC.

**1.** A data transmission cable (1) with an insulating outer jacket (21) comprising:
at least one data line (5, 55) for transmitting data signals,
and
at least one repeater unit(4),
whereby said data line (5), and said repeater unit (4) are integrated into said cable (1), whereby the data line (5, 55) and the repeater unit (4) are covered with the outer jacket (21).

**2.** The cable according to claim 1, whereas at least two repeater units (4) are integrated into said cable (1) at a predetermined distance from each other.

**3.** The cable according to claim 1 or 2, said cable (1) further comprises at least one power line (7, 57) for delivering electrical power, said power line (7, 57) is integrated in said cable (1).

**4.** The cable (1) according to any one of said claims 1 to 3, said cable (1) further comprising:
a first section (2) with a first data line (5) and a second section (3) with a second data line (55), the first and the second data lines (5, 55) are disposed for transmitting data signals; a power line (7) in the first section (2) for delivering electrical power,
whereby the repeater unit (4) is connected with the first and second data lines (5, 55), whereby the repeater unit (4) is connected with the power line (7), whereby the repeater unit (4) is provided for receiving data signals from the first data line (5), amplifying the data signals and sending the amplified data signals to the second data line (55), whereby the first data line (5), the repeater unit (4) and the second data line (55) are covered with the insulating outer jacket (21) of the cable (1).

**5.** The cable according to any of the preceding claims, whereby the repeater unit (4) is arranged on a repeater unit carrier (13, 24).

**6.** The cable of any one of the preceding claims, whereby the repeater unit (4) is covered with an electrical shielding (11), whereby the shielding (11) is connected with a shielding (9, 59) of the cable (1).

**7.** The cable of any one of claims 4 to 6, whereby the electrical shielding (11) of the repeater unit (4) has a cross sectional shape which is similar to the cross sectional shape of the cable (1).

**8.** The cable of any one of the preceding claims, whereby the repeater unit (4) and the endings of the first and second data lines (5, 55) are embedded in a molded material (22).

**9.** The cable of any one of the preceding claims, whereby the repeater unit (4) and the ending of the power line (7) are embedded in a molded material (22).

**10.** The cable of any one of the preceding claims, whereby the data lines (5, 55) are pairs of twisted electrical lines.

**11.** The cable according to any one of the claims 5 to 10, whereby the repeater unit (4) and the carrier (13, 24) are integrated in the cable (1).

**12.** The cable according to claim 11, whereby the carrier (24) is made of a molded material.

**13.** The cable of claim 11 or 12, whereby the carrier (24) comprises electrical conductors (14), the conductors (14) being connected with contacts of the repeater unit (4) and with wires (15) of the first and second data lines (5,55).

**14.** The cable assembly comprising at least one data transmission cable (1) according to any of the previous claims, whereas at least one electrical connector (31, 32) is terminated to at least one end of said cable (1).
